# EUROPÄISCHE PATENTSCHRIFT

(11) **EP 2 851 162 B1**
(45) Veröffentlichungstag und Bekanntmachung des Hinweises auf die Patenterteilung: **31.03.2021**
(21) Anmeldenummer: 14183559.5
(22) Anmeldetag: 04.09.2014
(51) Int. Cl.: B25J 9/16, G05B 19/423

(54) **Verfahren zum manuell geführten Verstellen der Pose eines Manipulatorarms eines Industrieroboters und zugehöriger Industrieroboter**
Method for manually handled adjustment of the pose of an industrial robot manipulator arm of an industrial robot and associated industrial robot
Procédé de réglage manuel de la pose d'un bras manipulateur d'un robot industriel et robot industriel associé

(30) Priorität: 19.09.2013 DE 102013218823
(43) Veröffentlichungstag der Anmeldung: 25.03.2015
(73) Patentinhaber: KUKA Deutschland GmbH, 86165 Augsburg (DE)
(72) Erfinder: Kogan, Yevgen, 86152 Augsburg (DE)
(74) Vertreter: Böss, Dieter Alexander

(56) Entgegenhaltungen:
- EP-A2- 2 392 435
- WO-A1-2009/106983
- WO-A1-2010/088959
- DE-A1-102008 027 008
- DE-T2- 60 016 190
- US-A1- 2011 190 932

## Beschreibung

Die Erfindung betrifft ein Verfahren zum manuell geführten Verstellen der Pose eines Manipulatorarms eines Industrieroboters und einen Industrieroboter aufweisend eine Robotersteuerung, die ausgebildet und/oder eingerichtet ist, um ein solches Verfahren durchzuführen.

Aus der DE 10 2008 062 622 A1 ist ein Verfahren zur Befehlseingabe in eine Steuerung eines Manipulators, insbesondere eines Roboters bekannt, mit den Schritten des Erfassens einer ersten Kraft, die auf den Manipulator in einer ersten Richtung wirkt; des Vergleichens der erfassten ersten Kraft mit gespeicherten Kräften, denen je ein Befehl zugeordnet ist; und der Ausgabe des dieser gespeicherten Kraft zugeordneten Befehls an die Steuerung des Manipulators, falls die erfasste erste Kraft mit einer gespeicherten Kraft übereinstimmt. Dabei ist der Manipulator vorzugsweise nachgiebig ausgestaltet, d. h. durch die zu einer Befehlseingabe vom Bediener manuell auf ihn ausgeübte Kräfte in erkennbarer Weise bewegbar. Dies kann durch eine reine Proportional-Positionsregelung mit entsprechend geringen Proportionalitätskonstanten realisiert werden. Gleichermaßen kann ein solch nachgiebiger Manipulator auch kraftgeregelt sein, sich dabei insbesondere aber auch in einer steifen Positionsregelung befinden. Hierzu können beispielsweise in seiner Steuerung anhand eines mathematischen Ersatzmodells die Kräfte errechnet werden, die in seiner aktuellen Stellung Gewichts- und Reibungskräfte gerade kompensieren. Werden diese Kräfte den Kraftregelungen der Motoren des Manipulators als Sollgrößen aufgeschaltet, kann der Manipulator bereits durch relativ geringe Kräfte aus seiner aktuellen Stellung bewegt werden. Eine weitere Möglichkeit, einen Manipulator nachgiebig, d. h. durch die zur Befehlseingabe auf ihn ausgeübten Kräfte, erkennbar bewegbar zu machen, besteht darin, die auf ihn ausgeübten Kräfte zu erfassen und auf diese mit einer entsprechenden Bewegung in Richtung dieser Kräfte und, vorzugsweise, mit einer der Größe der Kräfte entsprechenden Bewegungsgeschwindigkeit zu reagieren. Bei einem solchen nachgiebigen Manipulator führen also die auf ihn zur Befehlseingabe ausgeübten Kräfte zu einer messbaren, vorzugsweise auch vom Bediener erkennbaren Bewegung des Manipulators genau in diejenige Richtung, die durch das manuelle Führen durch einen Bediener des Manipulators vorgegeben wird.

Aufgabe der Erfindung ist es, ein Verfahren zum manuell geführten Verstellen der Pose eines Manipulatorarms eines Industrieroboters zu verbessern, insbesondere die Handhabung und/oder Programmierung des Industrieroboters durch einen Bediener zu vereinfachen.

Die US 2011/0190932 A1 beschreibt eine Steuervorrichtung für einen Roboterarm, der Montageaufgaben durchführt. Die Steuervorrichtung weist eine Datenbank auf, in welcher die Arbeitsabläufe gespeichert sind, welche Informationen über die Bewegung des Roboterarms umfassen. Eine Korrektureinheit bestimmt dabei die Art von Korrekturbewegungen und eine Krafterfassungseinheit erfasst die Kraft, die ein Benutzer manuell auf den Roboterarm aufbringt. Die Korrektureinheit passt die Bewegung des Roboterarms an und zwar auf Grundlage der gespeicherten Arbeitsabläufe und der von der Krafterfassungseinheit erfassten manuellen Führungskräfte des Benutzers, während sich der Roboterarm bewegt.

Die DE 10 2008 027 008 A1 beschreibt ein Verfahren zum Steuern eines Manipulators, insbesondere eines Roboters, mit den Schritten des Ermittelns einer Soll-Bewegungsrichtung auf Basis einer auf den Manipulator ausgeübten Kraft und des Bewegens des Manipulators in der ermittelten Soll-Bewegungsrichtung um eine vorbestimmte Strecke.

Die Aufgabe der Erfindung wird gelöst durch ein Verfahren zum manuell geführten Verstellen der Pose eines Manipulatorarms eines Industrieroboters, aufweisend die Schritte:
- Erfassen einer von einem Bediener des Industrieroboters auf den Manipulatorarm aufgebrachten Führungskraft,
- Bestimmen derjenigen Freiheit eines Referenz-Koordinatensystems in deren Richtung die Führungskraft ihre größte Kraftrichtungskomponente aufweist, als eine ausgewählte Freiheit,
- kraftgeregeltes Ansteuern der Antriebe des Industrieroboters derart, dass ein Verstellen eines vorbestimmten, mit dem Manipulatorarm verbundenen Bezugspunktes durch Bewegen des Manipulatorarms während eines manuell geführten Verstellens der Pose des Manipulatorarms nur in der ausgewählten Freiheit erfolgt, wobei
   das Bestimmen derjenigen Freiheit des Referenz-Koordinatensystems in deren Richtung die Führungskraft ihre größte Kraftrichtungskomponente aufweist, als eine ausgewählte Freiheit, erst dann durchgeführt wird, wenn die von dem Bediener des Industrieroboters auf den Manipulatorarm aufgebrachte erfasste Führungskraft eine vorgegebene Mindestkraft überschreitet, und
   eine vor Erreichen der vorgegebenen Mindestkraft parametrierte Steifigkeit während des Aufbringens der Führungskraft erhalten bleibt und die Steifigkeit erst dann reduziert wird, wenn nach dem Erreichen und/oder Überschreiten der vorgegebenen Mindestkraft die Führungskraft wieder reduziert wird.

Manipulatorarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Manipulatorarm mit mehreren über Gelenke verbundene Glieder und programmierbare Robotersteuerungen (Steuervorrichtungen) auf, die während des Betriebs die Bewegungsabläufe des Manipulatorarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt.

Manipulatorarme können beispielsweise ein Gestell und ein relativ zum Gestell mittels eines Gelenks drehbar gelagertes Karussell umfassen, an dem eine Schwinge mittels eines anderen Gelenks schwenkbar gelagert ist. An der Schwinge kann dabei ihrerseits ein Armausleger mittels eines weiteren Gelenks schwenkbar gelagert sein. Der Armausleger trägt dabei eine Roboterhand, wobei insoweit der Armausleger und/oder die Roboterhand mehrere weitere Gelenke aufweisen können. Ein mehrere über Gelenke verbundene Glieder aufweisender Manipulatorarm kann als ein Knickarmroboter mit mehreren seriell nacheinander angeordneten Gliedern und Gelenken konfiguriert sein, insbesondere kann der Manipulatorarm als ein Sechsachs-Knickarmroboter ausgebildet sein.

Manipulatorarme mit zugehörigen Robotersteuerungen, wie Industrieroboter können aber insbesondere auch sogenannte Leichtbauroboter sein, die sich zunächst von üblichen Industrierobotern dadurch unterscheiden, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere kraftgeregelt statt positionsgeregelt betrieben werden, was beispielsweise ein manuelles Verstellen der Pose des Manipulatorarmes vereinfacht. Außerdem kann dadurch eine sichere Mensch-Maschine-Kooperation erreicht werden, da beispielsweise unbeabsichtigte Kollisionen des Manipulatorarmes mit Personen entweder verhindert oder zumindest derart abgeschwächt werden können, so dass den Personen kein Schaden entsteht. Ein solcher Manipulatorarm bzw. ein solcher Leichtbauroboter kann mehr als sechs Freiheitsgrade aufweisen, so dass insoweit ein überbestimmtes System geschaffen wird, wodurch derselbe Punkt im Raum in gleicher Orientierung in mehreren verschiedenen Posen des Manipulatorarms erreicht werden kann. Der Leichtbauroboter kann auf externe Krafteinwirkungen in geeigneten Weisen reagieren. Zur Kraftmessung können Kraftsensoren verwendet werden, die in allen drei Raumrichtungen Kräfte und Drehmomente messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Unter der Pose des Manipulatorarms wird ganz allgemein die Summe alles Gelenkstellungen von Gelenken des Manipulatorarms verstanden, welche die einzelnen Glieder des Manipulatorarms verstellbar verbinden. Im engeren Sinne kann bei einem eindeutig bestimmten System unter Pose beispielsweise auch schon die Position und die Orientierung eines Bezugspunktes, wie beispielsweise eines Werkzeugbezugspunktes (Tool-Center-Points / TCP) des Manipulatorarms verstanden werden. Der Werkzeugbezugspunkt kann beispielsweise durch einen geeigneten Punkt an einem Handflansch des Manipulatorarms gebildet werden, an dem ein Greifer, ein Werkzeug oder eine sonstige Vorrichtung befestigt ist, um diese durch Verstellen der Pose des Manipulatorarms im Raum bewegen zu können. Ganz allgemein kann der Werkzeugbezugspunkt ein virtueller Raumpunkt auch außerhalb des Manipulatorarms sein, der jedoch geometrisch starr mit einem der Glieder des Manipulatorarms, insbesondere dem Handflansch des Manipulatorarms verbunden ist.

Unter einem manuell geführten Verstellen der Pose des Manipulatorarms wird insbesondere verstanden, dass die momentanen Gelenksstellungen des Manipulatorarms dadurch verändert werden, dass ein Bediener des Industrieroboters den Manipulatorarm an einem oder mehreren seiner Gelenke anfasst und beispielsweise durch Drücken, Ziehen und/oder Drehen des gegriffenen Gliedes oder der gegriffenen Glieder die Pose des Manipulatorarms verändert, d.h. verstellt. In einem grundlegenden Ausführungsbeispiel kann an dem in der kinematischen Kette letzten Glied des Manipulatorarms, d.h. am Handflansch des Manipulatorarms beispielsweise ein Griff befestigt oder zumindest ein Griffabschnitt vorgesehen sein, insbesondere starr befestigt sein, über den eine Führungskraft in die mechanisch Struktur des Manipulatorarms eingeleitet werden kann. Eine solche vom Bediener des Industrieroboters auf den Manipulatorarm aufgebrachte Führungskraft kann beispielsweise durch speziell dazu ausgebildete und eingerichtete Sensoren, insbesondere Kraftsensoren unmittelbar gemessen werden, oder aus Messwerten an bereits vorhandenen Gelenkssensoren, insbesondere Kraft-/Momentsensoren des Manipulatorarms mittelbar errechnet oder indirekt aus Motorströmen der Antriebe des Gelenke des Industrieroboters bestimmt werden.

Ein Referenz-Koordinatensystem kann beispielsweise ein Weltkoordinatensystem eines Arbeitsplatzes des Industrieroboters, ein Basiskoordinatensystem in einem Fuß des Industrieroboters oder ein Werkzeugkoordinatensystem eines am Industrieroboter befestigten Werkzeugs, eines Greifers oder einer anderen Vorrichtung sein, welche durch Verstellen der Pose des Manipulatorarms im Raum bewegen werden sollen. Das vorzugebende Referenz-Koordinatensystem kann insbesondere das dreidimensionale Kartesische Koordinatensystem mit sechs Freiheiten sein. Alternativ kann das Referenz-Koordinatensystem auch jedes andere beliebige Koordinatensystem sein. So kann es bei bestimmten Anwendungen zweckmäßiger sein, beispielsweise ein Polarkoordinatensystem, ein Zylinderkoordinatensystem oder ein Kugelkoordinatensystem zu verwenden. Ein jeweils beliebig anderes Koordinatensystem kann jedoch auch dadurch vorgegeben werden, dass es vom Bediener des Industrieroboters individuell vorgegeben wird. Insbesondere kann das individuelle Koordinatensystem durch "Teachen" von Punkten und/oder Geraden mittels des Industrieroboters selbst, definiert werden.

Als Freiheiten werden beispielsweise im Falle eines dreidimensionale Kartesischen Koordinatensystems die drei im Raum aufeinander senkrecht stehenden Raumrichtungen verstanden, sowie die drei Grundrotationen um diese drei im Raum aufeinander senkrecht stehenden Raumrichtungen. Im Falle anderer Referenz-Koordinatensysteme werden die Freiheiten durch die jeweils diesen Referenz-Koordinatensystemen entsprechenden Arten von "Koordinatenachsen" gebildet.

Zunächst erfolgt bei dem erfindungsgemäßen Verfahren ein Erfassen einer von einem Bediener des Industrieroboters auf den Manipulatorarm aufgebrachten Führungskraft, d.h. mittels Sensoren, insbesondere Kraftsensoren wird die Führungskraft unmittelbar gemessen, oder aus Messwerten an bereits vorhandenen Gelenkssensoren, insbesondere Kraft-/Momentsensoren des Manipulatorarms die Führungskraft mittelbar errechnet oder gegebenenfalls die Führungskraft indirekt aus Motorströmen der Antriebe des Gelenke des Industrieroboters bestimmt, um ein vom Bediener am Manipulatorarm beispielsweise ausgeübtes Drücken, Ziehen und/oder Drehen des gegriffenen Gliedes oder mehrerer gegriffener Glieder des Manipulatorarms hinsichtlich der in die Struktur des Manipulatorarms eingeleiteten Führungskraft hinsichtlich Betrag und Richtung bestimmen zu können.

Aus dem Betrag und der Richtung der vom Bediener eingeleiteten Führungskraft wird dann bei dem erfindungsgemäßen Verfahren diejenige Freiheit eines Referenz-Koordinatensystems bestimmt, in deren Richtung die Führungskraft ihre größte Kraftrichtungskomponente aufweist. Diese größte Kraftrichtungskomponente bestimmt dann die ausgewählte Freiheit, die beispielsweise im Falle eines Kartesischen Koordinatensystems eine der drei kartesischen Raumrichtungen oder eine der drei Rotationen um die jeweilige kartesische Raumrichtung sein kann. In einer speziellen Ausführung eines erfindungsgemäßen Verfahrens kann im Falle des Kartesischen Koordinatensystems auch vorgesehen sein, dass zwei Freiheiten, insbesondere zwei Raumrichtungen gleichzeitig ausgewählt werden, wodurch eigentlich eine Ebene ausgewählt wird, innerhalb der sich der vorgegebene Bezugspunkt ausschließlich aber darin frei verstellen lässt.

Diese größte Kraftrichtungskomponente kann beispielsweise dadurch bestimmt werden, dass die erfasste Kraft mathematisch in Form von Vektoren auf alle Freiheiten des Referenz-Koordinatensystems projiziert werden und diejenige Freiheit des Referenz-Koordinatensystems, in welcher der Betrag der projizieren Kraft am größten ist von allen projizieren Kräften der wenigstens zwei Freiheiten des Referenz-Koordinatensystems, als eine ausgewählte Freiheit bestimmt wird.

Für ein Erfassen einer von einem Bediener des Industrieroboters auf den Manipulatorarm aufgebrachten Führungskraft muss der Industrieroboter nicht notwendigerweise in einer Regelung sein, d.h. kraftgeregelt, insbesondere in Impedanzregelung oder Admittanzregelung angesteuert sein, sondern es können beispielsweise separate Kraft- und/oder Momentsensoren am Manipulatorarm vorgesehen sein, welche die von einem Bediener des Industrieroboters auf den Manipulatorarm aufgebrachte Führungskraft messen. Dadurch kann die von einem Bediener des Industrieroboters auf den Manipulatorarm aufgebrachte Führungskraft beispielsweise auch kann bestimmt werden, wenn die Gelenke des Manipulatorarms starr sind, insbesondere wenn Bremsen die Gelenke des Manipulatorarms festgesetzt, d.h. blockiert bzw. bewegungslos gemacht haben. In einer anderen Ausführung kann ein Erfassen einer von einem Bediener des Industrieroboters auf den Manipulatorarm aufgebrachten Führungskraft aber auch in einem kraftgeregelten Zustand des Industrieroboters erfolgen.

Das erfindungsgemäße Verfahren abschließend und fortführend erfolgt ein kraftgeregeltes Ansteuern der Antriebe des Industrieroboters derart, dass ein Verstellen eines vorbestimmten, mit dem Manipulatorarm verbundenen, insbesondere geometrisch oder strukturell verbundenen Bezugspunktes durch Bewegen des Manipulatorarms während eines manuell geführten Verstellens der Pose des Manipulatorarms nur in der ausgewählte Freiheit erfolgt. Dies bedeutet, dass ein Bediener den Manipulatorarm nur derart bewegen kann, dass der Bezugspunkt sich ausschließlich entlang der ausgewählten Freiheit bewegen kann. Im Falle eines Kartesischen Koordinatensystems als Referenz-Koordinatensystem kann dies bedeuten, dass der Bezugspunkt beispielsweise nur auf einer senkrechten Geraden im Raum angehoben und/oder abgesenkt werden kann, jedoch nicht in einer horizontalen Ebene verschoben werden kann. Dabei würde auch keine Art von Rotation des Bezugspunktes möglich sein. Diese Art der eingeschränkten Bewegbarkeit würde verfahrensgemäß dann angesteuert werden, wenn der Bediener beispielsweise den Handflansch des Manipulatorarms zumindest im Wesentlichen nach oben oder nach unten bewegt hat. Unwesentliche Bewegungen zur Seite hin, also in einer horizontalen Ebene wären zwar zunächst möglich, da sich der Manipulatorarm anfangs nur in einer allgemeinen, nicht verfahrensgemäßen Regelung befindet.

Nachdem jedoch gemäß dem letzten Verfahrensschritt ein kraftgeregeltes Ansteuern der Antriebe des Industrieroboters anschließend derart erfolgt, dass ein Verstellen des vorbestimmten Bezugspunktes durch Bewegen des Manipulatorarms während eines manuell geführten Verstellens der Pose des Manipulatorarms nur in der ausgewählte Freiheit erfolgt, kann der Bediener beispielsweise den Handflansch des Manipulatorarms nur noch nach oben oder nach unten bewegen. So kann beispielsweise eine Zustellbewegung eines vom Manipulatorarm getragenen Werkzeugs exakt senkrecht auf ein horizontal ausgerichtetes Bauteil erfolgen, obwohl der Manipulatorarm lediglich handgeführt und weder programmgesteuert, noch durch Betätigen von Fahrtasten automatisch bewegt wird.

In einem solchen auf eine ausgewählte Freiheit eingeschränkten Bewegungsmodus kann das erfindungsgemäße Verfahren erneut angewendet werden.

In einer Ausführungsvariante kann vor dem Erfassen einer von einem Bediener des Industrieroboters auf den Manipulatorarm aufgebrachten Führungskraft, ein kraftgeregeltes Ansteuern von Antrieben des Industrieroboters, die zum automatischen Verstellen der Pose des Manipulatorarms ausgebildet und eingerichtet sind, erfolgen.

Generell kann das erfindungsgemäße Verfahren, insbesondere erstmalig oder in einer wiederholten Anwendung, mit den folgenden Schritten durchgeführt werden:
- Vorgeben eines Referenz-Koordinatensystems mit wenigstens zwei Freiheiten,
- Vorgeben eines mit dem Manipulatorarm verbundenen Bezugspunktes,
- kraftgeregeltes Ansteuern von Antrieben des Industrieroboters, die zum automatischen Verstellen der Pose des Manipulatorarms ausgebildet und eingerichtet sind,
- Erfassen einer von einem Bediener des Industrieroboters auf den Manipulatorarm aufgebrachten Führungskraft,
- Bestimmen derjenigen Freiheit des Referenz-Koordinatensystems in deren Richtung die Führungskraft ihre größte Kraftrichtungskomponente aufweist, als eine ausgewählte Freiheit,
- kraftgeregeltes Ansteuern der Antriebe des Industrieroboters derart, dass ein Verstellen des vorbestimmten Bezugspunktes durch Bewegen des Manipulatorarms während eines manuell geführten Verstellens der Pose des Manipulatorarms nur in der ausgewählte Freiheit erfolgt.

Nachdem ein Referenz-Koordinatensystem mit wenigstens zwei Freiheiten und ein Bezugspunkt vorgeben wurde, beispielsweise während einer Initialisierung der Robotersteuerung, durch Auswählen beispielsweise in einem Menü einer Robotersteuerungssoftware oder durch Vorgabe mittels eines Roboterprogramms, wird der Industrieroboter kraftgeregelt angesteuert, indem ein kraftgeregeltes Ansteuern von Antrieben des Industrieroboters erfolgt, die zum automatischen Verstellen der Pose des Manipulatorarms ausgebildet und eingerichtet sind.

Dabei kann der Industrieroboter beispielsweise zunächst in einen uneingeschränkten kraftgeregelten Ansteuerzustand gebracht werden, so dass das erfindungsgemäße Verfahren erneut von Anfang an durchgeführt werden kann. Alternativ kann eine andere Freiheit unmittelbar aus einem erfindungsgemäß eingeschränkten Bewegungsmodus ausgewählt und dann die andere Freiheit als ausgewählte Freiheit eingestellt werden.

So kann beispielsweise während einer Beweglichkeit des vorbestimmten Bezugspunktes in nur einer vertikalen Richtung der Bediener eine deutlich hohe Kraft, die eine vorgegebene Mindestkraft überschreiten kann, in horizontaler Richtung aufbringen, derart, dass diese neue in der horizontalen Ebene liegende Freiheit als neue ausgewählte Freiheit eingestellt wird. Dies bedeutet, dass der vorbestimmte Bezugspunkte zunächst nur in vertikaler Richtung bewegt werden kann, nach beispielsweise einem deutlichen Ruck durch den Bediener in einer horizontalen Richtung, der vorbestimmte Bezugspunkte nun ausschließlich in dieser horizontalen Richtung bewegt werden kann und nicht mehr vertikal verstellt werden kann.

Um diese zu ermöglichen, kann das Bestimmen derjenigen Freiheit des Referenz-Koordinatensystems in deren Richtung die Führungskraft ihre größte Kraftrichtungskomponente aufweist, als eine ausgewählte Freiheit, dann erfolgen, wenn die von dem Bediener des Industrieroboters auf den Manipulatorarm aufgebrachte erfasste Führungskraft eine vorgegebene Mindestkraft überschreitet.

Alternativ oder ergänzend kann das kraftgeregelte Ansteuern der Antriebe des Industrieroboters derart, dass ein Verstellen des vorbestimmten Bezugspunktes durch Bewegen des Manipulatorarms während eines manuell geführten Verstellens der Pose des Manipulatorarms nur in der ausgewählte Freiheit, dann erfolgen, wenn die von dem Bediener des Industrieroboters auf den Manipulatorarm aufgebrachte erfasste Führungskraft eine vorgegebene Mindestkraft überschreitet.

In beiden Fällen bildet die vorgegebene Mindestkraft eine Kraftschwelle, die insoweit erst überwunden werden muss, damit die andere Freiheit als neue ausgewählte Freiheit zur Anwendung kommt. Eine Überschreitung der Mindestkraft stellt insoweit einen Auslöser dar, der das Einstellen und/oder Wechseln der ausgewählten Freiheit veranlasst. So kann der vorbestimmte Bezugspunkt weiterhin in der ausgewählten Freiheit mit geringem Kraftaufwand bewegt werden, ohne dass die eingeschränkte Führung in Richtung dieser ausgewählten Freiheit verloren geht. Dies bedeutet, dass der Bediener durchaus eine gewisse Kraft in die nicht zugelassene nicht ausgewählte Freiheit auf den Manipulatorarm einbringen kann, dies jedoch zu keiner Verstellung des Manipulatorarms in dieser nicht zugelassenen nicht ausgewählten Freiheit führt. Erst wenn die vorgegebene Mindestkraft durch den Bediener überwunden wird, beispielsweise durch ein ruckartiges Reißen in eine nicht zugelassenen nicht ausgewählten Freiheit springt sozusagen die ausgewählte Freiheit auf diese neue Freiheit bzw. Richtung über, so dass der vorbestimmte Bezugspunkt nun nur noch in dieser neuen Richtung bewegt werden kann. Ein Bewegen des vorbestimmten Bezugspunktes in der bisherigen ausgewählten Freiheit ist in einer solchen Ausführungsform des Verfahrens dann nicht mehr möglich.

Alternativ zu einem Auslösen des Einstellens und/oder Wechselns der ausgewählten Freiheit durch Überschreiten der Mindestkraft, kann ein Auslöser auch eine Betätigungstaste beispielsweise an der Struktur des Manipulatorarms, an einem mit dem Manipulatorarm verbundenen Griff oder an einem Programmierhandgerät sein, bei dessen Betätigen das Einstellen und/oder Wechseln der ausgewählten Freiheit durch die Robotersteuerung veranlasst wird.

In einer weiteren Alternative kann ein Auslösen des Einstellens und/oder Wechselns der ausgewählten Freiheit bzw. ein Umschalten der ausgewählten Freiheit aufgrund einer zeitlichen Mindestdauer einer Krafteinwirkung in eine Richtung erfolgen, welche die momentane Bewegungsrichtung ist. Dies kann bedeuten, dass beispielsweise, wenn der Bedienen z.B. orthogonal zur aktuellen Bewegungsrichtung eine Kraft, insbesondere eine relativ kleine Kraft ausübt, diese Kraft jedoch über einen gewissen Zeitraum in der gleichen Richtung beibehält, die Bewegungsrichtung, d.h. der Freiheitsgrad umgeschaltet wird.

Das Bestimmen derjenigen Freiheit des Referenz-Koordinatensystems in deren Richtung die Führungskraft ihre größte Kraftrichtungskomponente aufweist, als eine ausgewählte Freiheit, kann in einer Variante des Verfahrens erst dann durchgeführt werden bzw. möglich sein, wenn die von dem Bediener, insbesondere von der Hand des Bedieners des Industrieroboters auf den Manipulatorarm aufgebrachte erfasste Führungskraft eine vorgegebene Mindestkraft überschreitet.

Das kraftgeregelte Ansteuern der Antriebe des Industrieroboters derart, dass ein Verstellen des vorbestimmten Bezugspunktes durch Bewegen des Manipulatorarms während eines manuell geführten Verstellens der Pose des Manipulatorarms nur in der ausgewählte Freiheit erfolgt, kann in einer anderen Variante des Verfahrens erst dann durchgeführt werden bzw. möglich sein, wenn die von dem Bediener bzw. der Hand des Bedieners des Industrieroboters auf den Manipulatorarm aufgebrachte erfasste Führungskraft eine vorgegebene Mindestkraft überschreitet.

In allen entsprechenden Ausführungen kann während des Aufbringens der Führungskraft eine vor Erreichen der vorgegebenen Mindestkraft parametrierte Steifigkeit des kraftgeregelt angesteuerten Industrieroboters bei Erreichen und/oder Überschreiten der vorgegebenen Mindestkraft reduziert werden. Eine solche Reduzierung der Steifigkeit erfolgt dabei nur in der ausgewählten Freiheit. In allen anderen, nicht ausgewählten Freiheiten bleibt die ursprünglich parametrierte Steifigkeit unverändert erhalten. In einer Grundfunktion ist die Robotersteuerung eingerichtet, die Antriebe des Industrieroboters derart kraftgeregelt anzusteuern, dass zunächst sämtliche Freiheiten, im kartesischen Koordinatensystems des realen Raumes beispielsweise die drei Raumrichtungen X, Y, Z, sowie die drei Rotationen A, B, C um diese Raumrichtungen X, Y, Z, mit einer hohen Steifigkeit belegt sind. Dies bedeutet anders ausgedrückt, dass der vorgegebene Bezugspunkt, beispielsweise der Werkzeugbezugspunkt (TCP) des Manipulatorarms zunächst in der Grundfunktion gar nicht oder nur unmerklich aus seiner momentanen Position und Lage manuell herausbewegt werden kann. Eine hohe Steifigkeit kann insoweit an eine völlige Starrheit grenzen, so dass eine für den Bediener wahrnehmbare Unbeweglichkeit in "Richtung" aller Freiheiten vorgegeben wird.

Erst wenn der Bediener eine Führungskraft auf den Manipulatorarm aufbringt, die eine vorgegebene Mindestkraft übersteigt, wird die hohe Steifigkeit der Grundfunktion nicht mehr für sämtliche Freiheiten aufrechterhalten, sondern in derjenigen Freiheit deutlich wahrnehmbar reduziert, so dass der Bediener den vorgegebene Bezugspunkt durch Verstellen des Manipulatorarms entlang der ausgewählten Freiheit mit geringem oder nur mäßigem manuellen Kraftaufwand bewegen, d.h. verstellen kann.

Ein Übergang von der hohen Steifigkeit zu der reduzierten Steifigkeit in der ausgewählten Freiheit kann zwar sprunghaft bzw. annähernd sprunghaft stattfinden. In einer bedienerfreundlicheren Ausführung kann jedoch ein solches plötzliches Losreißen dadurch verhindert werden, dass die Steifigkeit in der ausgewählten Freiheit über einen Zeitraum hinweg allmählich von der hohen Steifigkeit auf die reduzierte Steifigkeit verändert wird. So lässt sich ein weiches Lösen des Manipulatorarms in der ausgewählten Freiheit realisieren.

Dazu kann die Reduzierung der Steifigkeit des kraftgeregelt angesteuerten Industrieroboters allmählich, insbesondere innerhalb 0,1 bis 2,0 Sekunden erfolgen. Durch eine allmähliche Reduzierung der Steifigkeit von der hohen Steifigkeit auf die reduzierte Steifigkeit innerhalb eines solchen Zeitraums ist dem Bediener eine ausreichende Reaktionszeit belassen, um die Änderung der Steifigkeit wahrzunehmen und entsprechend darauf zu reagieren. Dies kann Verhindern, dass der Bediener durch ein ruckartiges Aufbringen einer hohen Führungskraft, welche die vorgegebene Mindestkraft überwinden soll und auch überwindet, bei einem sonst plötzlichen Verringern der Steifigkeit, den Manipulatorarm in unerwünschter Weise entlang der ausgewählten Freiheit wegreißt.

Wenn die Steifigkeit über einen Zeitraum von 0,1 bis 2,0 Sekunden hinweg allmählich, insbesondere linear reduziert wird, entspricht dies in etwa einer durchschnittlichen Reaktionszeit eines Bedieners, um das Reduzieren der Steifigkeit bewusst wahrnehmen zu können. Der Zeitraum über den hinweg eine allmähliche Reduzierung erfolgen soll, kann generell, insbesondere innerhalb des Zeitraums von 0,1 bis 2,0 Sekunden in der Robotersteuerung vorab einstellbar bzw. auswählbar sein.

Eine alternative oder ergänzende Möglichkeit ein unerwartetes plötzliches Losreißen zu verhindern, ist es, die Robotersteuerung derart einzurichten, dass eine vor Erreichen der vorgegebenen Mindestkraft ursprünglich parametrierte Steifigkeit während des Aufbringens der Führungskraft erhalten bleibt und insbesondere auch dann weiterhin aufrechterhalten wird, wenn die vorgegebene Mindestkraft bereits überschritten ist und die Steifigkeit erst dann reduziert wird, wenn nach dem Erreichen und/oder Überschreiten der vorgegebenen Mindestkraft die Führungskraft zunächst erst wieder reduziert, insbesondere auf Null gesetzt wird.

Dies bedeutet, dass ein Bediener zunächst den Manipulatorarm in eine gewünschte freizuschaltende Richtung drückt oder zieht, bis seine Führungskraft die vorgegebene Mindestkraft übersteigt. Dann wird diese dadurch ausgewählte Freiheit nicht unmittelbar freigeschalten, d.h. in Richtung dieser Freiheit die Steifigkeit deutlich reduziert, sondern die hohe Steifigkeit bleibt bei ununterbrochenem Weiterdrücken oder Weiterziehen erhalten. Erst wenn der Bediener seine Führungskraft wegnimmt oder zumindest deutlich reduziert, d.h. mit dem Weiterdrücken oder Weiterziehen aufhört, wird die ausgewählte Freiheit freigeschalten, d.h. eine Steifigkeit in Richtung der ausgewählten Freiheit wird reduziert und der Bediener kann durch erneutes Aufbringen seine Führungskraft, die nun nicht mehr die vorgegebene Mindestkraft übersteigen muss, sondern deutlich darunter liegen kann, den Manipulatorarm innerhalb der ausgewählten, freigeschaltenen Freiheit verstellen.

In allen Ausführungen kann das kraftgeregelte Ansteuern der Antriebe des Industrieroboters mittels Impedanzregelung oder Admittanzregelung erfolgen.

Die Steuervorrichtung kann insoweit eingerichtet sein, die Nachgiebigkeit des Manipulators mittels Impedanzregelung zu erzeugen.

Eine Impedanzregelung basiert im Gegensatz zu einer Admittanzregelung auf einer vorhandenen Drehmomentenregelung auf Gelenkebene. Es werden die Abweichung der tatsächlichen Lage von einer definierten Solllage gemessen und entsprechend des gewünschten dynamischen Verhaltens eine gewünschte verallgemeinerte Kraft, bzw. Kräfte und Momente, bestimmt. Diese Kraft kann über die bekannte Kinematik des Manipulators auf entsprechende Gelenkdrehmomente abgebildet werden. Die Drehmomente können schließlich über die unterlagerte Drehmomentenregelung eingestellt werden.

Die Steuervorrichtung kann aber auch eingerichtet sein, die Nachgiebigkeit des Manipulators mittels Admittanzregelung zu erzeugen.

Eine Admittanzregelung basiert auf einer vorhandenen Positionsregelung des Manipulators auf Gelenkebene. Hier müssen die von außen auf den Manipulator einwirkenden verallgemeinerten Kräften gemessen werden. Ausgehend von diesen Kräften wird eine, dem gewünschten dynamischen Verhalten entsprechende, Bewegung des Manipulators bestimmt, die über eine inverse Kinematik und die unterlagerte Positionsregelung an den Manipulator kommandiert wird.

Die Erzielung beispielsweise eines gewünschten kartesischen Verhaltens kann basierend auf einer unterlagerten Positions-, Drehmomenten- oder Gelenk-Impedanzregelung erfolgen. Die Realisierung dieser Regelungen können durch die Integration von Momentensensorik in die Gelenke eines Industrieroboters erreicht werden. Der Sensor erfasst dabei das am Abtrieb eines Getriebes wirkende eindimensionale Drehmoment. Diese Größe kann für die Regelung als Messgröße herangezogen werden und ermöglicht somit die Berücksichtigung der Elastizität der Gelenke im Rahmen der Regelung. Insbesondere werden durch eine Drehmomentsensorik, im Gegensatz zur Verwendung eines Kraftmomentensensors an einem Endeffektor des Manipulators, auch diejenigen Kräfte gemessen, die nicht auf den Endeffektor, sondern auf die Glieder des Manipulators und/oder insbesondere auf ein von dem Manipulator gehaltenes Werkstück ausgeübt werden.

Die vom Bediener des Industrieroboters auf den Manipulatorarm aufgebrachte Führungskraft kann bezogen auf den vorbestimmten Bezugspunkt des Manipulatorarms erfasst, insbesondere gemessen und/oder errechnet werden. So muss der Bediener nicht notwendigerweise die Führungskraft genau an dem vorbestimmten Bezugspunkt aufbringen, sondern er kann die Führungskraft vielmehr an jeder beliebigen Stelle des Manipulatorarms aufbringen, da ja zunächst sämtliche Freiheiten mit einer hohen Ausgangssteifigkeit parametriert sind, der gesamte Manipulatorarm mit all seinen Gliedern zunächst also zumindest annähernd oder vollständig ein Verhalten wie ein Starrkörper zeigt. Insoweit muss die aufgebrachte Führungskraft also nicht unmittelbar an dem vorbestimmten Bezugspunkt gemessen werden, sondern kann durch Kraft- und/oder Drehmomentmessungen an anderen Stellen, insbesondere den Gelenken des Manipulatorarms bestimmt, insbesondere errechnet werden.

In einer speziellen Ausgestaltung eines erfindungsgemäßen Verfahrens kann sich der Industrieroboter zunächst in einem kraftgeregelt angesteuerten Modus befinden, in dem ein Verstellen des vorbestimmten Bezugspunktes des Manipulatorarms während des manuell geführten Verstellens der Pose des Manipulatorarms nur in der ausgewählte Freiheit möglich ist, und bei Überschreiten der vom Bediener des Industrieroboters auf den Manipulatorarm in Richtung einer der anderen, nicht ausgewählten Freiheit aufgebrachten Kraftrichtungskomponente der Führungskraft über die vorgegebene Mindestkraft hinaus, diese andere Freiheit als neue ausgewählte Freiheit herangezogen wird.

So kann unmittelbar von einer freigeschaltenen ausgewählten Freiheit in eine andere Freiheit als ausgewählte Freiheit umgeschaltet werden.

Beispielsweise während einer Beweglichkeit des vorbestimmten Bezugspunktes in nur einer vertikalen Richtung kann der Bediener eine deutlich hohe Kraft, die eine vorgegebene Mindestkraft überschreiten kann, in horizontaler Richtung aufbringen, derart, dass diese neue in der horizontalen Ebene liegende Freiheit als neue ausgewählte Freiheit eingestellt wird. Dies bedeutet, dass der vorbestimmte Bezugspunkte zunächst nur in vertikaler Richtung bewegt werden kann, nach beispielsweise einem deutlichen Ruck durch den Bediener in einer horizontalen Richtung, der vorbestimmte Bezugspunkte nun ausschließlich in dieser horizontalen Richtung bewegt werden kann und nicht mehr vertikal verstellt werden kann.

In allen Ausführungen kann ein Auslösen des Einstellens und/oder ein Auslösen des Wechselns der ausgewählten Freiheit, insbesondere ein Umschalten der ausgewählten Freiheit aufgrund einer zeitlichen Mindestdauer einer Krafteinwirkung in eine Richtung erfolgt, welche insbesondere die momentane Bewegungsrichtung ist.

In allen Ausführungen kann außerdem das Referenz-Koordinatensystem das dreidimensionale Kartesische Koordinatensystem mit sechs Freiheiten, insbesondere ein Weltkoordinatensystem eines Arbeitsplatzes des Industrieroboters, ein Basiskoordinatensystem in einem Fuß des Industrieroboters oder ein Werkzeugkoordinatensystem eines am Industrieroboter befestigten Werkzeugs sein.

Das vorzugebende Referenz-Koordinatensystem kann also beispielsweise ein Weltkoordinatensystem eines Arbeitsplatzes des Industrieroboters, ein Basiskoordinatensystem in einem Fuß des Industrieroboters oder ein Werkzeugkoordinatensystem eines am Industrieroboter befestigten Werkzeugs, eines Greifers oder einer anderen Vorrichtung sein, welche durch Verstellen der Pose des Manipulatorarms im Raum bewegen werden sollen. Das vorzugebende Referenz-Koordinatensystem kann insbesondere das dreidimensionale Kartesische Koordinatensystem mit sechs Freiheiten sein. Alternativ kann das Referenz-Koordinatensystem auch jedes andere beliebige Koordinatensystem sein. So kann es bei bestimmten Anwendungen zweckmäßiger sein, beispielsweise ein Polarkoordinatensystem, ein Zylinderkoordinatensystem oder ein Kugelkoordinatensystem zu verwenden.

Die Aufgabe der Erfindung wird neben dem erfindungsgemäßen Verfahrens als solches auch gelöst durch einen Industrieroboter aufweisend eine Robotersteuerung, die ausgebildet und/oder eingerichtet ist, ein Roboterprogramm auszuführen, sowie aufweisend einen Manipulatorarm mit wenigstens drei Gelenken, die gemäß des Roboterprogramms automatisiert und/oder in einem Handfahrbetrieb automatisch verstellbar sind, wobei die Robotersteuerung ausgebildet und/oder eingerichtet ist, ein Verfahren wie beschrieben durchzuführen.

Ein konkretes Ausführungsbeispiel eines gemäß dem erfindungsgemäßen Verfahren betreibbaren Industrieroboters ist in der nachfolgenden Beschreibung unter Bezugnahme auf die beigefügten Figuren näher erläutert. Konkrete Merkmale dieses Ausführungsbeispiels können unabhängig davon, in welchem konkreten Zusammenhang sie erwähnt sind, gegebenenfalls auch einzeln oder in Kombination betrachtet, allgemeine Merkmale der Erfindung darstellen.

Es zeigen:
- Fig. 1: eine perspektivische Ansicht eines Industrieroboters in der Bauart eines Leichtbauroboters mit einer schematisch dargestellten Robotersteuerung und einem Manipulatorarm, der mittels elektrischer Antriebe in seiner Pose ausschließlich vertikal verstellbar ist,
- Fig. 2: eine perspektivische Ansicht des Industrieroboters in der Bauart eines Leichtbauroboters mit einer schematisch dargestellten Robotersteuerung und einem Manipulatorarm gemäß Fig. 1, der mittels elektrischer Antriebe in seiner Pose ausschließlich horizontal verstellbar ist, und

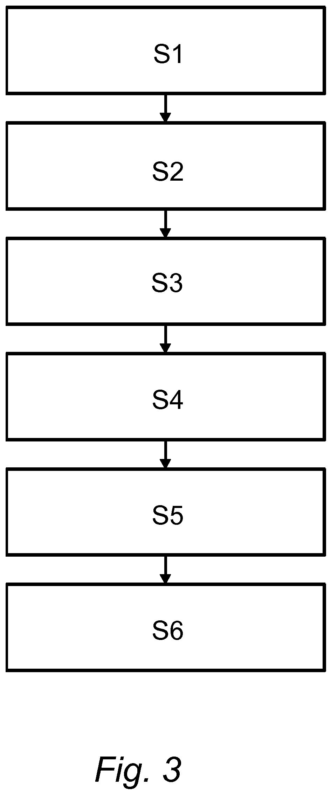

- Fig. 3: ein schematisches Ablaufdiagramm eines erfindungsge-mäßen Verfahrens mit den Verfahrenschritten S1 bis S6.

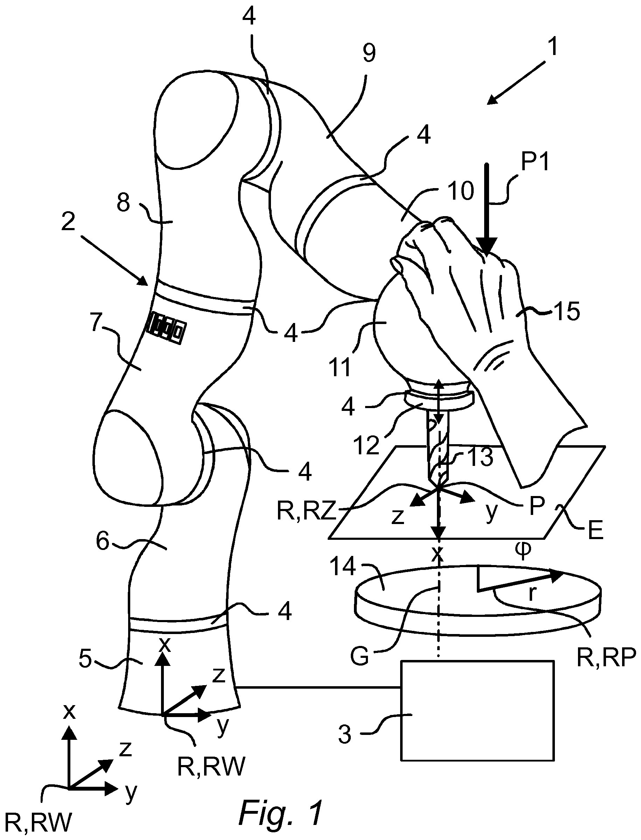

Die Fig. 1 zeigt einen Industrieroboter 1 in einer beispielhaften Ausführung als ein so genannter Leichtbauroboter, der einen Manipulatorarm 2 und eine Robotersteuerung 3 aufweist. Der Manipulatorarm 2 umfasst im Falle des vorliegenden Ausführungsbeispiels mehrere, nacheinander angeordnete und mittels Gelenke 4 drehbar miteinander verbundene Glieder 5 bis 12.

Die Robotersteuerung 3 des Industrieroboters 1 ist ausgebildet bzw. eingerichtet, ein Roboterprogramm auszuführen, durch welches die Gelenke 4 des Manipulatorarms 2 gemäß des Roboterprogramms automatisiert oder in einem Handfahrbetrieb automatisch verstellt bzw. drehbewegt werden können. Dazu ist die Robotersteuerung 3 mit ansteuerbaren elektrischen Antrieben verbunden, die ausgebildet sind, die Gelenke 4 des Industrieroboters 1 zu verstellen.

Die Robotersteuerung 3 ist ausgebildet und/oder eingerichtet, ein Verfahren zum manuell geführten Verstellen der Pose des Manipulatorarms 2, wie im Folgenden anhand eines konkreten Ausführungsbeispiels näher beschrieben, durchzuführen.

In einem ersten Verfahrenschritt S1 wird dem in Fig. 1 dargestellten Manipulatorarm 2 eines von mehreren möglichen Referenz-Koordinatensystemen R vorgegeben.

Im Falle des vorliegenden Ausführungsbeispiels handelt es sich um Referenz-Koordinatensysteme R in Form von dreidimensionalen Kartesischen Koordinatensystemen mit jeweils sechs Freiheiten, insbesondere einem Weltkoordinatensystem RW eines Arbeitsplatzes des Industrieroboters 1, ein Basiskoordinatensystem RB in dem Glied 5 des Industrieroboters 1, das einen Fuß des Industrieroboters 1 bildet, oder ein Werkzeugkoordinatensystem RZ eines am Industrieroboter 1 befestigten Werkzeugs 13.

Alternativ kann das Referenz-Koordinatensysteme R beispielsweise ein durch ein Werkstück 14 nahe gelegtes Polarkoordinatensystem RP sein.

Anschließend wird in einem zweiten Verfahrenschritt S2 ein mit dem Manipulatorarm 2 verbundener Bezugspunkt P vorgegeben. Im Falle des vorliegenden Ausführungsbeispiels ist dies die Werkzeugspitze des Werkzeugs 13.

Im dritten Verfahrenschritt S3 werden die Antriebe des Industrieroboters, die zum automatischen Verstellen der Pose des Manipulatorarms ausgebildet und eingerichtet sind, kraftgeregelt angesteuert.

Anschließend erfolgt in einem vierten Verfahrenschritt S4 ein Erfassen einer von einer Hand 15 eines Bedieners des Industrieroboters 1 auf den Manipulatorarm 2 aufgebrachte Führungskraft.

Im fünften Verfahrenschritt S5 wird diejenige Freiheit des Referenz-Koordinatensystems R, RZ bestimmt, in deren Richtung die Führungskraft ihre größte Kraftrichtungskomponente aufweist. Diese bildet dann die ausgewählte Freiheit.

Danach kann im sechsten Verfahrenschritt S6 ein kraftgeregeltes Ansteuern der Antriebe des Industrieroboters 1 derart erfolgen, dass ein Verstellen des vorbestimmten Bezugspunktes P durch Bewegen des Manipulatorarms 2 während eines manuell geführten Verstellens der Pose des Manipulatorarms 2 durch die Hand 15 nur in der ausgewählte Freiheit erfolgen kann.

Das Bestimmen derjenigen Freiheit des Referenz-Koordinatensystems R, RZ in deren Richtung die Führungskraft ihre größte Kraftrichtungskomponente aufweist, als eine ausgewählte Freiheit, wird im Falle einer Variante des vorliegenden Ausführungsbeispiels erst dann durchgeführt, wenn die von der Hand 15 des Bedieners des Industrieroboters 1 auf den Manipulatorarm 2 aufgebrachte erfasste Führungskraft eine vorgegebene Mindestkraft überschreitet.

Das kraftgeregelte Ansteuern der Antriebe des Industrieroboters 1 derart durchgeführt, dass ein Verstellen des vorbestimmten Bezugspunktes P durch Bewegen des Manipulatorarms 2 während eines manuell geführten Verstellens der Pose des Manipulatorarms 2 nur in der ausgewählte Freiheit möglich ist, wird im Falle einer anderen Variante des vorliegenden Ausführungsbeispiels erst dann durchgeführt, wenn die von der Hand 15 des Bedieners des Industrieroboters 1 auf den Manipulatorarm 2 aufgebrachte erfasste Führungskraft eine vorgegebene Mindestkraft überschreitet.

Dies bedeutet, dass ein Bediener beispielsweise nach einem heftigen oder ruckartigen Drücken mittels seiner Hand 15 in Pfeilrichtung P1 nach unten, nun den Manipulatorarm 2 nur mehr derart bewegen kann, dass der Bezugspunkt P sich ausschließlich entlang der ausgewählten Freiheit, nämlich in Richtung der X-Achse des Koordinatensystems RZ bewegen kann. Im Falle des Kartesischen Koordinatensystems RZ als Referenz-Koordinatensystem R bedeutet dies, dass im vorliegenden Ausführungsbeispiel der Bezugspunkt P nur auf einer senkrechten Geraden G im Raum angehoben und/oder abgesenkt werden kann, jedoch nicht mehr in einer horizontalen Ebene E verschoben werden kann. Dabei würde auch keine Art von Rotation des Bezugspunktes P mehr möglich sein. Diese Art der eingeschränkten Bewegbarkeit wird verfahrensgemäß dann angesteuert werden, wenn der Bediener beispielsweise das Glied 11 des Manipulatorarms 2 zumindest im Wesentlichen nach oben oder nach unten bewegt hat. Unwesentliche Bewegungen zur Seite hin, also in der horizontalen Ebene E wären zwar zunächst möglich, da sich der Manipulatorarm 2 anfangs nur in einer allgemeinen, nicht verfahrensgemäßen Regelung befindet. Nachdem jedoch gemäß dem letzten Verfahrensschritt S6 ein kraftgeregeltes Ansteuern der Antriebe des Industrieroboters 1 dann derart erfolgt, dass ein Verstellen des vorbestimmten Bezugspunktes P durch Bewegen des Manipulatorarms 2 während eines manuell geführten Verstellens der Pose des Manipulatorarms 2 nur noch in der ausgewählte Freiheit erfolgen kann, kann der Bediener beispielsweise das Glied 11 des Manipulatorarms 2 nur noch nach oben oder nach unten bewegen. So kann beispielsweise eine Zustellbewegung des vom Manipulatorarm 2 getragenen Werkzeugs 13 exakt senkrecht auf ein beispielsweise horizontal ausgerichtetes Bauteil 14 erfolgen, obwohl der Manipulatorarm 2 lediglich handgeführt und weder programmgesteuert, noch durch Betätigen von Fahrtasten automatisch bewegt wird.

In einem solchen auf eine ausgewählte Freiheit, nämlich gemäß Fig. 1 in Richtung der X-Achse des Koordinatensystems RZ eingeschränkten Bewegungsmodus, kann das erfindungsgemäße Verfahren erneut angewendet werden. Dabei kann der Industrieroboter 1 zunächst in einen wieder uneingeschränkten kraftgeregelten Ansteuerzustand gebracht werden, so dass das erfindungsgemäße Verfahren erneut von Anfang an durchgeführt werden kann oder es kann eine andere Freiheit unmittelbar aus dem eingeschränkten Bewegungsmodus gemäß Fig. 1 ausgewählt und dann die andere Freiheit als ausgewählte Freiheit eingestellt werden.

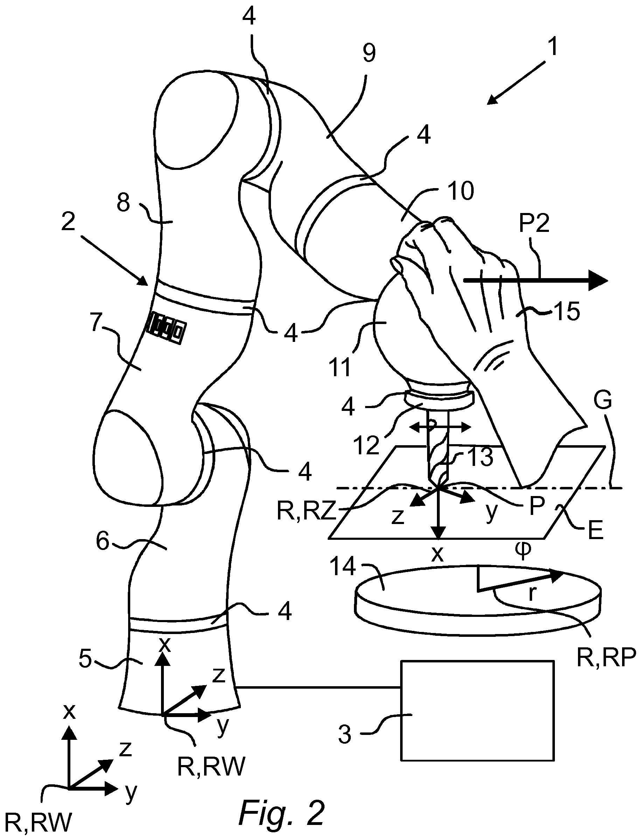

So kann beispielsweise wie in Fig. 2 schematisch gezeigt, während einer Beweglichkeit des vorbestimmten Bezugspunktes P in nur einer vertikalen Richtung der Bediener mit seiner Hand 15 eine deutlich hohe Kraft, die eine vorgegebene Mindestkraft überschreiten kann, in horizontaler Richtung aufbringen, derart, dass diese neue in der horizontalen Ebene E liegende Freiheit als neue ausgewählte Freiheit eingestellt wird. Dies bedeutet, dass der vorbestimmte Bezugspunkte P zunächst nur gemäß Fig. 1 in vertikaler Richtung bewegt werden kann, nach beispielsweise einem deutlichen Ruck durch die Hand 15 des Bedieners in Pfeilrichtung P2 in einer horizontalen Richtung, der vorbestimmte Bezugspunkte P nun ausschließlich in dieser horizontalen Richtung, also entweder in Richtung der Y-Achse des Koordinatensystems RZ oder in Richtung der Z-Achse des Koordinatensystems RZ bewegt werden kann und nicht mehr vertikal in Richtung der X-Achse des Koordinatensystems RZ verstellt werden kann.

## Patentansprüche

1. Verfahren zum manuell geführten Verstellen der Pose eines Manipulatorarms (2) eines Industrieroboters (1), aufweisend die Schritte:
- Erfassen (S4) einer von einem Bediener des Industrieroboters (1) auf den Manipulatorarm (2) aufgebrachten Führungskraft,
- Bestimmen (S5) derjenigen Freiheit eines Referenz-Koordinatensystems (R, RW, RB, RZ, RP) in deren Richtung die Führungskraft ihre größte Kraftrichtungskomponente aufweist, als eine ausgewählte Freiheit,
- kraftgeregeltes Ansteuern (S6) der Antriebe des Industrieroboters (1) derart, dass ein Verstellen eines vorbestimmten, mit dem Manipulatorarm verbundenen Bezugspunktes (P) durch Bewegen des Manipulatorarms (2) während eines manuell geführten Verstellens der Pose des Manipulatorarms (2) nur in der ausgewählten Freiheit erfolgt,
**dadurch gekennzeichnet, dass**
das Bestimmen derjenigen Freiheit des Referenz-Koordinatensystems (R, RW, RB, RZ, RP) in deren Richtung die Führungskraft ihre größte Kraftrichtungskomponente aufweist, als eine ausgewählte Freiheit, erst dann durchgeführt wird, wenn die von dem Bediener des Industrieroboters (1) auf den Manipulatorarm (2) aufgebrachte erfasste Führungskraft eine vorgegebene Mindestkraft überschreitet, und
eine vor Erreichen der vorgegebenen Mindestkraft parametrierte Steifigkeit während des Aufbringens der Führungskraft erhalten bleibt und die Steifigkeit erst dann reduziert wird, wenn nach dem Erreichen und/oder Überschreiten der vorgegebenen Mindestkraft die Führungskraft wieder reduziert wird.

2. Verfahren nach Anspruch 1, bei dem vor dem Erfassen (S4) einer von einem Bediener des Industrieroboters (1) auf den Manipulatorarm (2) aufgebrachten Führungskraft, ein kraftgeregeltes Ansteuern (S3) von Antrieben des Industrieroboters (1), die zum automatischen Verstellen der Pose des Manipulatorarms (2) ausgebildet und eingerichtet sind, erfolgt.

3. Verfahren nach einem der Ansprüche 1 oder 2, bei dem das kraftgeregelte Ansteuern der Antriebe des Industrieroboters (1) derart, dass ein Verstellen des vorbestimmten Bezugspunktes (P) durch Bewegen des Manipulatorarms (2) während eines manuell geführten Verstellens der Pose des Manipulatorarms (2) nur in der ausgewählte Freiheit erfolgt, erst dann durchgeführt wird, wenn die von dem Bediener des Industrieroboters (1) auf den Manipulatorarm (2) aufgebrachte erfasste Führungskraft eine vorgegebene Mindestkraft überschreitet.

4. Verfahren nach einem der Ansprüche 1 bis 3, bei dem während des Aufbringens der Führungskraft eine vor Erreichen der vorgegebenen Mindestkraft parametrierte Steifigkeit des kraftgeregelt angesteuerten Industrieroboters (1) bei Erreichen und/oder Überschreiten der vorgegebenen Mindestkraft reduziert wird.

5. Verfahren nach Anspruch 4, bei dem die Reduzierung der Steifigkeit des kraftgeregelt angesteuerten Industrieroboters (1) allmählich, insbesondere innerhalb 0,1 bis 2,0 Sekunden erfolgt.

6. Verfahren nach einem der Ansprüche 1 bis 5, bei dem das kraftgeregelte Ansteuern der Antriebe des Industrieroboters (1) mittels Impedanzregelung oder Admittanzregelung erfolgt.

7. Verfahren nach einem der Ansprüche 1 bis 6, bei dem die vom Bediener des Industrieroboters (1) auf den Manipulatorarm (2) aufgebrachte Führungskraft bezogen auf den vorbestimmten Bezugspunkt (P) des Manipulatorarms (2) erfasst, insbesondere gemessen und/oder errechnet wird.

8. Verfahren nach einem der Ansprüche 1 bis 7, bei dem sich der Industrieroboter (1) in einem kraftgeregelt angesteuerten Modus befindet, in dem ein Verstellen des vorbestimmten Bezugspunktes (P) des Manipulatorarms (2) während des manuell geführten Verstellens der Pose des Manipulatorarms (2) nur in der ausgewählten Freiheit möglich ist, und bei Überschreiten der vom Bediener des Industrieroboters (1) auf den Manipulatorarm (2) in Richtung einer der anderen, nicht ausgewählten Freiheit aufgebrachten Kraftrichtungskomponente der Führungskraft über die vorgegebene Mindestkraft hinaus, diese andere Freiheit als neue ausgewählte Freiheit herangezogen wird.

9. Verfahren nach einem der Ansprüche 1 bis 8, bei dem ein Auslösen des Einstellens und/oder des Wechselns der ausgewählten Freiheit, insbesondere ein Umschalten der ausgewählten Freiheit aufgrund einer zeitlichen Mindestdauer einer Krafteinwirkung in eine Richtung erfolgt, welche insbesondere die momentane Bewegungsrichtung ist.

10. Verfahren nach einem der Ansprüche 1 bis 9, bei dem das Referenz-Koordinatensystem (R, RW, RB, RZ, RP) das dreidimensionale Kartesische Koordinatensystem mit sechs Freiheiten, insbesondere ein Weltkoordinatensystem (RW) eines Arbeitsplatzes des Industrieroboters (1), ein Basiskoordinatensystem (RB) in einem Fuß des Industrieroboters (1) oder ein Werkzeugkoordinatensystem (RZ) eines am Industrieroboter (2) befestigten Werkzeugs (13), eines Greifers oder einer anderen Vorrichtung ist.

11. Industrieroboter aufweisend eine Robotersteuerung (3), die ausgebildet und/oder eingerichtet ist, ein Roboterprogramm auszuführen, sowie aufweisend einen Manipulatorarm (2) mit wenigstens drei Gelenken (4), die gemäß des Roboterprogramms automatisiert und/oder in einem Handfahrbetrieb automatisch verstellbar sind, wobei die Robotersteuerung (3) ausgebildet und/oder eingerichtet ist, ein Verfahren nach einem der Ansprüche 1 bis 10 durchzuführen.

## Claims

1. Method for the manually guided adjustment of the pose of a manipulator arm (2) of an industrial robot (1), comprising the steps:
- detecting (S4) a guidance force applied to the manipulator arm (2) by an operator of the industrial robot (1),
- determining (S5) the degree-of-freedom of a reference coordinate system (R, RW, RB, RZ, RP) in which direction the guidance force has its greatest force vector component, as a selected degree-of-freedom,
- controlling (S6) the drives of the industrial robot (1) using force control in such a manner that a predetermined reference point (P) associated with the manipulator arm is moved only in the selected degree-of-freedom as a result of moving the manipulator arm (2) during a manually-guided adjustment of the pose of the manipulator arm (2),
**characterised in that**
determining the degree-of-freedom of the reference coordinate system (R, RW, RB, RZ, RP) in which direction the guidance force has its greatest force vector component, as a selected degree-of-freedom, is only carried out when the detected guidance force applied to the manipulator arm (2) by the operator of the industrial robot (1) exceeds a pre-specified minimum force, and
a stiffness that has been parameterised before the predetermined minimum force has been reached is maintained during the application of the guidance force and the stiffness is only reduced when the guidance force has been reduced again after the predetermined minimum force has been reached and/or exceeded.

2. Method according to claim 1, wherein before detecting (S4) a guidance force applied by an operator of the industrial robot (1) on the manipulator arm (2), a force-controlled control (S3) of drives of the industrial robot (1) is performed, which are designed and configured for automatically adjusting the pose of the manipulator arm (2).

3. Method according to any of claims 1 or 2, wherein the control of the drives of the industrial robot (1) using force control, such that an adjustment of the predetermined reference point (P), by moving the manipulator arm (2) during a manually guided adjustment of the pose of the manipulator arm (2) only in the selected degree of freedom, is only performed when the determined guidance force applied to the manipulator arm (2) by the operator of the industrial robot (1) exceeds a predetermined minimum force.

4. Method according to any of claims 1 to 3, wherein during the application of the guidance force a stiffness of the force-controlled industrial robot (1), which stiffness is parameterised before reaching the predetermined minimum force, is reduced when the predetermined minimum force is reached and/or exceeded.

5. Method according to claim 4, wherein the stiffness of the force-controlled industrial robot (1) is reduced gradually, in particular within 0.1 to 2.0 seconds.

6. Method according to any of claims 1 to 5, wherein the control of the drives of the industrial robot (1) using force control is implemented by means of impedance control or admittance control.

7. Method according to any of claims 1 to 6, wherein the guidance force applied to the manipulator arm (2) by an operator of the industrial robot (2) is detected relative to the predetermined reference point (P) of the manipulator arm (2), in particular measured and/or calculated.

8. Method according to any of claims 1 to 7, wherein the industrial robot (1) is in a force-controlled mode, in which an adjustment of the predetermined reference point (P) of the manipulator arm (2) is possible during the manually guided adjustment of the pose of the manipulator arm (2) only in the selected degree of freedom, and when the force vector component of the guidance force applied by the operator of the industrial robot (1) on the manipulator arm (2), in the direction that corresponds to one of the other, non-selected degrees-of-freedom, exceeds the predetermined minimum force, this other degree-of-freedom is used as the new selected degree-of-freedom.

9. Method according to any of claims 1 to 8, wherein the setting and/or change of the selected degree-of-freedom, in particular switching the selected degree-of-freedom, is triggered on the basis of a minimum time duration of a force in a direction which is in particular the current direction of movement.

10. Method according to any of claims 1 to 9, wherein the reference coordinate system (R, RW, RB, RZ, RP) is the three-dimensional Cartesian coordinate system with six degrees of freedom, in particular a world coordinate system (RW) of a workplace of the industrial robot (1), a basic coordinate system (RB) in a base of the industrial robot (1) or a tool coordinate system (RZ) of a tool (13), a gripper, or another device attached to the industrial robot (2).

11. Industrial robot having a robot controller (3) which is configured and/or set up to execute a robot program, and also having a manipulator arm (2) with at least three joints (4), which can be automated according to the robot program and/or can be automatically adjusted in a hand-guided operation mode, wherein the robot controller (3) is configured and/or set up to execute a method according to any of claims 1 to 10.

## Revendications

1 . Procédé de réglage manuel de la pose d'un bras manipulateur (2) d'un robot industriel (1) comprenant les étapes suivantes :
- détection (S4) d'une force de guidage appliquée sur le bras manipulateur (2) par un opérateur du robot industriel (1)
- détermination (S5) de la liberté d'un système de coordonnées de référence (R, RW, RB, RZ, RP) dans la direction duquel la force de guidage présente sa plus grande composante de direction de force, en tant qu'une liberté sélectionnée,
- pilotage (S6) régulé par la force des entraînements du robot industriel (1) de telle sorte qu'un réglage d'un point de référence (P) prédéterminé relié au bras manipulateur en déplaçant le bras manipulateur (2) lors d'un réglage manuel de la pose du bras manipulateur (2) n'a lieu que dans la liberté sélectionnée,
**caractérisé en ce que**
la détermination de ladite liberté du système de coordonnées de référence (R, RW, RB, RZ, RP) dans la direction duquel la force de guidage présente sa plus grande composante de direction de force, en tant qu'une liberté sélectionnée, n'est effectuée que lorsque la force de guidage détectée, appliquée sur le bras manipulateur (2) par l'opérateur du robot industriel (1) dépasse une force minimale prédéterminée, et
une rigidité paramétrée, avant que la force minimale prédéterminée ne soit atteinte, est maintenue pendant l'application de la force de guidage, et la rigidité n'est réduite que lorsque, après que la force minimale prédéterminée a été atteinte et/ou dépassée, la force de guidage est à nouveau réduite.

2. Procédé selon la revendication 1, dans lequel, avant la détection (S4) d'une force de guidage appliquée sur le bras manipulateur (2) par un opérateur du robot industriel (1), il se produit un pilotage (S3) régulé par la force des entraînements du robot industriel (1), qui sont réalisés et configurés pour régler automatiquement la pose du bras manipulateur (2).

3. Procédé selon l'une des revendications 1 ou 2, dans lequel le pilotage régulé en force des entraînements du robot industriel (1), de telle sorte qu'un réglage du point de référence (P) par déplacement du bras manipulateur (2) lors d'un réglage manuel de la pose du bras manipulateur (2) n'a lieu que dans la liberté sélectionnée, n'est effectué que lorsque la force de guidage détectée appliquée sur le bras manipulateur (2) par l'opérateur du robot industriel (1) dépasse une force minimale prédéterminée.

4. Procédé selon l'une quelconque des revendications 1 à 3, dans lequel, pendant l'application de la force de guidage, une rigidité du robot industriel (1) piloté par la force, paramétrée avant que la force minimale prédéterminée soit atteinte, est réduite lorsque la force minimale prédéterminée est atteinte et/ou dépassée.

5. Procédé selon la revendication 4, dans lequel la réduction de la rigidité du robot industriel (1) piloté par la force s'effectue progressivement, en particulier dans une durée de 0,1 à 2,0 secondes.

6. Procédé selon l'une des revendications 1 à 5, dans lequel le pilotage régulé en force des entraînements du robot industriel (1) est effectué au moyen d'un réglage de l'impédance ou d'un réglage de l'admission.

7. Procédé selon l'une quelconque des revendications 1 à 6, dans lequel la force de guidage appliquée sur le bras manipulateur (2) par l'opérateur du robot industriel (1) est détectée, en particulier mesurée et/ou calculée, par rapport au point de référence (P) prédéterminé du bras manipulateur (2).

8. Procédé selon l'une quelconque des revendications 1 à 7, dans lequel le robot industriel (1) se trouve dans un mode de pilotage régulé par la force, dans lequel un réglage du point de référence (P) déterminé du bras manipulateur (2) n'est possible, pendant le réglage manuel de la pose du bras manipulateur (2), que dans la liberté sélectionnée, et lorsque la composante directionnelle de la force de guidage appliquée par l'opérateur du robot industriel (1) sur le bras manipulateur (2) en direction d'une des autres libertés non sélectionnées dépasse la force minimale prédéterminée, cette autre liberté est utilisée comme nouvelle liberté sélectionnée.

9. Procédé selon l'une quelconque des revendications 1 à 8, dans lequel un déclenchement du réglage et/ou de la modification de la liberté sélectionnée, en particulier une commutation de la liberté sélectionnée, a lieu sur la base d'une durée minimale d'une force appliquée dans une direction qui est en particulier la direction de mouvement momentanée.

10. Procédé selon l'une quelconque des revendications 1 à 9, dans lequel le système de coordonnées de référence (R, RW, RB, RZ, RP) est le système de coordonnées cartésiennes tridimensionnel à six libertés, en particulier un système de coordonnées mondial (RW) d'un poste de travail du robot industriel (1), un système de coordonnées de base (RB) dans un pied du robot industriel (1) ou un système de coordonnées d'outil (RZ) d'un outil (13) fixé au robot industriel (2), d'une pince ou d'un autre dispositif.

11. Robot industriel comprenant une commande de robot (3) qui est réalisée et/ou configurée pour exécuter un programme de robot, et comprenant aussi un bras manipulateur (2) ayant au moins trois articulations (4) qui, en fonction du programme de robot, sont automatisées et/ou peuvent être réglées de manière automatique en mode de déplacement manuel, la commande de robot (3) étant réalisée et/ou configuée pour mettre en oeuvre un procédé selon l'une des revendications 1 à 10.
